# EUROPÄISCHE PATENTSCHRIFT

(11) **EP 4 530 766 B1**
(45) Veröffentlichungstag und Bekanntmachung des Hinweises auf die Patenterteilung: **11.11.2026**
(21) Anmeldenummer: 23200577.7
(22) Anmeldetag: 28.09.2023
(51) Int. Cl.: G05B 19/042, G05B 23/02

(54) **VERFAHREN UND SYSTEM ZUR VERIFIKATION EINER FELDGERÄTEFUNKTION**
METHOD AND SYSTEM FOR VERIFICATION OF A FIELD DEVICE FUNCTION
PROCÉDÉ ET SYSTÈME DE VÉRIFICATION D'UNE FONCTION D'APPAREIL DE TERRAIN

(43) Veröffentlichungstag der Anmeldung: 02.04.2025
(73) Patentinhaber: Krohne Messtechnik GmbH, 47058 Duisburg (DE)
(72) Erfinder: Kuschnerus, Dirk, 47802 Krefeld (DE); Wallau, Christian, 40217 Düsseldorf (DE)
(74) Vertreter: Von Rohr Patentanwälte Partnerschaft mbB

(56) Entgegenhaltungen:
- DE-A1- 102017 127 024
- DE-A1- 102020 133 616

## Beschreibung

Die vorliegende Erfindung betrifft die Verifikation einer Feldgerätefunktion eines Feldgeräts. Insbesondere betrifft die vorliegende Erfindung ein Verfahren gemäß dem Oberbegriff von Anspruch 1, ein System und ein Computerprogrammprodukt.

Besonders bevorzugt betrifft die vorliegende Erfindung prozesstechnische Anlagen der Chemieindustrie, Lebensmittelindustrie und des produzierenden Gewerbes. Sie ist jedoch grundsätzlich auch in anderen Bereichen anwendbar und vorteilhaft.

Die Anlagensicherheit gebietet es, als Feldgeräte im Einsatz befindliche Messgeräte regelmäßig auf korrekte Funktion zu überprüfen und auf diese Weise die Feldgerätefunktion zu verifizieren. Hierzu können Daten und Fehlerberichte ausgelesen sowie Prüfmethoden ausgeführt werden.

Oftmals ist eine große Anzahl von Feldgeräten in einer Anlage angeordnet. Aufgrund des bevorzugt dauerhaften Einsatzes der Feldgeräte ist regelmäßig vorgesehen, dass eine ordnungsgemäße Feldgerätefunktion des jeweiligen Feldgeräts verifiziert wird, ohne das Feldgerät zu demontieren.

Um die Feldgerätefunktion zu verifizieren, bildet das Feldgerät eine Verifikationsinformation. Die Verifikationsinformation kann einen Gerätestatus und/oder Messwerte des Feldgeräts aufweisen oder hierdurch gebildet sein. Zur Verifikation ist vorgesehen, dass eine Kopplung zwischen einem mobilen Endgerät (im Folgenden auch nur Endgerät genannt) und dem Feldgerät erfolgt. Durch die Kopplung wird eine drahtlose Datenverbindung zwischen dem Feldgerät und dem Endgerät aufgebaut. Die Verifikationsinformation wird im Feldgerät gebildet, übertragen und die Feldgerätefunktion des Feldgeräts kann nach Übertragung der Verifikationsinformation mit bzw. basierend auf der Verifikationsinformation verifiziert werden.

Bei bekannten Verifikationen ist es notwendig, dass ein Benutzer das Endgerät in die Nähe des Feldgeräts bewegt und das Endgerät durch manuellen Eingriff, nämlich Auswahl des gewünschten Feldgeräts und Eingabe eines Befehls zur Kopplung, mit dem Feldgerät verbindet (manuelles Pairing). Hierzu hat der Benutzer Kenntnisse von einem Erfordernis zur Verifikation bestimmter Feldgeräte und steuert die Bildung der Verifikationsinformation über ein Benutzerinterface des Endgeräts, was sich insgesamt als zeitaufwendig und somit teuer erwiesen hat.

Die DE 10 2017 127 024 A1 betrifft ein Verfahren zur Betreuung zumindest eines Feldgeräts der Prozessautomatisierungstechnik, wobei ein Smart Device mit dem Feldgerät über eine Datenverbindung verbunden und das Feldgerät über das Smart Device durch einen Anwender betreut wird.

Die DE 10 2020 133 616 A1 betrifft ein Verfahren zur Information über einen Fehlerfall in einer Anlage der Automatisierungstechnik, wobei die Anlage eine Vielzahl von Feldgeräten aufweist, wobei ein Gerätestatus kontinuierlich bestimmt wird und im Fehlerfall eine Ortsposition des betreffenden Feldgeräts an die mobile Bedieneinheit übermittelt wird.

Die aus dem Stand der Technik bekannte Vorgehensweise zur Verifikation ist auch dahingehend nachteilig, dass die manuelle Benutzerführung aufgrund des erheblichen Aufwands und Bindung personeller Ressourcen einer engmaschigen Verifikation entgegensteht.

Aufgabe der vorliegenden Erfindung ist es vor diesem Hintergrund, ein Verfahren, ein System und ein Computerprogrammprodukt anzugeben, womit der Verifikationsaufwand reduziert und eine verbesserte Betriebssicherheit realisiert werden können.

Diese Aufgabe wird durch ein Verfahren gemäß Anspruch 1, durch ein System gemäß Anspruch 13 oder ein Computerprogrammprodukt gemäß Anspruch 14 gelöst. Weiterbildungen sind Gegenstand der abhängigen Ansprüche.

In dem vorschlagsgemäßen Verfahren erfolgt die Kopplung vollautomatisch (automatisiertes Pairing), wenn das Endgerät in einen Empfangsbereich des Feldgeräts gelangt. Bevorzugt erfolgt eine Überwachung und bei Erkennung eines koppelbaren Feldgerätes bzw. Endgeräts werden die für die Kopplung notwendigen Schritte automatisch initiiert.

Anders als im Vordergrund laufende Prozesse, die eine Interaktion erfordern und hierfür Eingabe- und Ausgaberessourcen belegen und verwenden, werden die vom Endgerät realisierten Schritte des vorschlagsgemäßen Verfahrens vorzugsweise als Hintergrundprozess bewirkt, also ohne Interaktion mit einem Benutzer und/oder ohne Eingabe- und Ausgaberessourcen zu belegen oder zu verwenden.

Ferner wird die Verifikationsinformation über die (bei der Kopplung gebildete) drahtlose Datenverbindung vollautomatisch von dem Feldgerät übertragen. Die Übertragung kann durch das Endgerät oder durch die Kopplung initiiert werden.

Die Verifikation mit automatischer Kopplung und Übertragung der Verifikationsinformation kann auch als passive Verifikation bezeichnet werden, nachdem die Verifikation bevorzugt frei oder unabhängig von Benutzereingriffen erfolgt.

Die Initiierung des Kopplungsprozesses ausgelöst durch eine Erkennung, dass das Endgerät im Empfangsbereich des Feldgeräts ist, führt in vorteilhafter Weise dazu, dass die Kopplung und die Übertragung der Verifikationsinformation vollautomatisch, also unter Vermeidung jedes manuellen Benutzereingriffs erfolgen.

Insbesondere handelt es sich bei der Kopplung und weiteren, bevorzugt allen, Schritten bis hin zur Verifikation anhand der Verifikationsinformationen um ein oder mehrere Hintergrundaktivitäten. Diese können bei gesperrtem Bildschirm, bei gesperrten sonstigen Bedienelementen des Endgeräts, während andere Anwendungen auf dem Endgerät ausgeführt und dargestellt werden und/oder unabhängig von etwaigen Benutzereingriffen am Endgerät selbsttätig erfolgen.

Die beschriebene Automatisierung der Kopplung und Übertragung der Verifikationsinformation führen in vorteilhafter Weise dazu, dass eine Verifikation insgesamt ohne Benutzereingriff erfolgen kann. Folglich braucht das mobile Endgerät lediglich ohne Benutzereingriff im Bereich einer das oder die Feldgeräte aufweisenden Anlage relativ zu den Feldgeräten bewegt werden. Denn auf diese Weise gelangt das mobile Endgerät sukzessive in Empfangsbereiche der Feldgeräte und diese können entsprechend ohne Benutzereingriff vollautomatisch verifiziert werden, bevorzugt viel öfter als es mit manueller Verifikation praktikabel wäre.

Es ist bevorzugt, dass das mobile Endgerät von Mitarbeitern mitgeführt wird oder Teil eines Fahrzeugs bildet und auf diese Weise gelegentlich in den Empfangsbereich des oder der Feldgeräte gelangt. So kann sichergestellt werden, dass eine Verifikation des (jeweiligen) Feldgeräts statistisch jedenfalls oft genug und insbesondere viel öfter als erforderlich oder als früher üblich erfolgen kann, wodurch letztendlich die Betriebssicherheit signifikant verbessert werden kann.

Damit wird eine engmaschigere Überwachung der Feldgeräte und eine Prädiktion der Ausfallwahrscheinlichkeit und damit des Anlagenzustands ermöglicht. Im Ergebnis kann in synergistischer Weise die Gefahr eines Ausfalls einer Anlage oder von Anlagenteilen signifikant reduziert werden, was zu einer verbesserten Betriebssicherheit führt, während der Bedarf an personellen Ressourcen für die Verifikation sogar im Vergleich zur grobmaschigeren manuellen Verifikation abnimmt.

Es versteht sich, dass ungeachtet der vollautomatischen Vorgehensweise im Sinne der vorliegenden Erfindung eine manuell angestoßene Verifikation bedarfsweise ergänzend erfolgen kann. Insbesondere wird eine Statistik über erfolgte Verifikationen geführt und eine manuelle Verifikation initiiert, sollte wider Erwarten die vollautomatische Kopplung und Übertragung der Verifikationsinformation einmal nicht rechtzeitig erfolgen. Hierzu kann ein Signal bzw. eine Anweisung ausgegeben werden, beispielsweise über das mobile Endgerät. Das mobile Endgerät kann bedarfsweise ergänzend über eine Benutzerschnittstelle zum manuellen Durchführen der für die Verifikation notwendigen Schritte ausgebildet sein, die jedoch für die automatische Verifikation nicht verwendet wird.

Die Verifikation bzw. ein dieser zugrundeliegender Selbsttest des Feldgeräts kann in unterschiedlichen Abstufungen vorgenommen oder unterstützt werden. Beispielsweise kann die Verifikation bzw. der dieser zugrundeliegender Selbsttest des Feldgeräts in unterschiedlichen Leveln erfolgen:
- Level 0: Verifikation bei laufender Messung ohne Trennung von Messumformer und Sensor
- Level 1: Verifikation ohne Trennung von Messumformer und Sensor, zusätzliche Unterbrechung des Messbetriebs durch Simulation von Messwerten
- Level 2: Verifikation bei Trennung von Sensor und Messumformer / durch physikalische Einspeisung von Messsignalen

Mit anderen Worten bleibt während der Verifikation eine Verbindung zwischen einem Messumformer und einem Sensor des Feldgeräts vorzugsweise ununterbrochen. Die Verifikation erfolgt bevorzugt bei laufender Messung ohne Trennung von Messumformer und Sensor. Die Verifikation unter dieser Voraussetzung wird fortan auch als "Level 0"-Verifikation bezeichnet. Alternativ oder zusätzlich kann die Verifikation ebenfalls ohne Trennung von Messumformer und Sensor durchgeführt werden, wobei der Messbetrieb jedoch unterbrochen wird und ggf. Messwerte währenddessen simuliert oder anderweitig substituiert werden. Die Verifikation unter dieser Voraussetzung wird fortan auch als "Level 1"-Verifikation bezeichnet. Die Steuerung des oder der Level oder anders gearteter Abstufungen kann (voll)automatisch durch das Feldgerät und/oder durch das Endgerät erfolgen.

Grundsätzlich ist es alternativ oder zusätzlich möglich, das System bzw. die Anlage temporär mit demontiertem Messumformer zu betreiben, beispielsweise unter physikalischer Einspeisung von Messsignalen, um den Messumformer separat auf seine Funktion zu überprüfen und das Ergebnis der Verifikation der Feldgerätefunktion zugrunde zu legen. Vorzugsweise wird für die Verifikation der Feldgerätefunktion jedoch eine physikalische Änderung am Feldgerät bzw. an der Anlage vermieden, insbesondere also die Verbindung des Messumformers mit dem Sensor des Feldgeräts aufrechterhalten.

Die vorliegende Erfindung wird im Folgenden anhand eines Feldgeräts und eines Endgeräts erläutert und kann grundsätzlich auch mit nur einem Feldgerät und nur einem Endgerät realisiert werden. Es versteht sich jedoch, dass sich die vorliegende Erfindung skalieren lässt. Insbesondere ist die vorschlagsgemäße Verifikation mehrerer Feldgeräte nacheinander mit demselben oder unterschiedlichen Endgeräten besonders vorteilhaft. Alternativ oder zusätzlich kann die vorschlagsgemäße Verifikation mehrerer Feldgeräte gleichzeitig mit demselben oder unterschiedlichen Endgeräten besonders vorteilhaft sein. Es kann also eine gleichzeitige Kopplung oder Koppelbarkeit desselben Endgeräts mit mehreren Feldgeräten zwecks gleichzeitiger Verifikation vorgesehen sein. Die bezüglich des einen Endgeräts und des einen Feldgeräts erläuterten Merkmale der vorliegenden Erfindung sind entsprechend auf mehrere Feldgeräte, Endgeräte und Kopplungen anwendbar und hierbei besonders vorteilhaft, insbesondere da sich die Vorteile im Zusammenhang mit Anlagen, die mehrere Feldgeräte aufweisen, in besonderem Maße zeigen.

Ein weiterer Aspekt der vorliegenden Erfindung betrifft ein System zur Durchführung des vorschlagsgemäßen Verfahrens, das also ein oder mehrere Feldgeräte und mindestens ein mobiles Endgerät aufweist und dazu ausgebildet ist, dass die Kopplung zwischen dem Endgerät und dem Feldgerät vollautomatisch erfolgt, wenn das Endgerät in den Empfangsbereich des Feldgeräts gelangt, und dass die Verifikationsformation über die drahtlose Datenverbindung vollautomatisch von dem Feldgerät übertragen wird.

Bei dem vorschlagsgemäßen System handelt es sich insbesondere um eine prozesstechnische Anlage mit zahlreichen Feldgeräten und mindestens einem, bevorzugt mehreren mobilen Endgeräten. Eine Bewegung des oder der Endgeräte durch die oder entlang der Anlage ermöglicht es so in vorteilhafter Weise, den Verifikationsaufwand zu reduzieren und die erhöhte Betriebssicherheit zu realisieren. Denn mit dem vorschlagsgemäßen System lässt sich eine Verifikation statistisch ausreichend oft und praktisch wesentlich öfter als zwingend erforderlich erreichen.

Ein weiterer, auch unabhängig realisierbarer Aspekt der vorliegenden Erfindung betrifft ein Computerprogramm bzw. Computerprogrammprodukt aufweisend Programmcode bzw. Programmcodemittel - insbesondere auf einem nicht transienten Speichermittel gespeichert -, der/die, wenn sie auf Prozessoren des Feldgeräts / der Feldgeräte und des Endgeräts / der Endgeräte ausgeführt werden, die Durchführung des vorschlagsgemäßen Verfahrens bewirken.

Das Computerprogramm bzw. Computerprogrammprodukt bietet den Vorteil einer einfachen Implementierung und gegebenenfalls praktikablen Nachrüstbarkeit bestehender prozesstechnischer Anlagen und Systeme hiermit zur Durchführung des vorschlagsgemäßen Verfahrens.

Ein Feldgerät im Sinne der vorliegenden Erfindung ist vorzugsweise ein Messgerät oder eine ein Messgerät aufweisende Einrichtung zum bevorzugt permanenten und/oder ortsgebundenen Einsatz in einer Anlage, beispielsweise der chemischen Industrie, Lebensmittelindustrie und/oder des produzierenden Gewerbes.

Besonders bevorzugt handelt es sich bei einem Feldgerät im Sinne der vorliegenden Erfindung um eine Messvorrichtung zur Instrumentierung, wie ein Durchflussmessgerät, ein Durchflusskontrollgerät, ein Füllstandsmessgerät, ein Temperaturmessgerät, ein Druckmessgerät, ein Prozessanalysegerät oder dergleichen.

Bei dem Feldgerät im Sinne der vorliegenden Erfindung kann es sich alternativ oder zusätzlich um einen Aktor handeln, vorzugswiese mit einer entsprechenden Messvorrichtung, die insbesondere dem Zweck eines Selbsttests, einer Selbstüberwachung und/oder Diagnose dienen kann.

Eine Feldgerätefunktion im Sinne der vorliegenden Erfindung ist (jedenfalls primär) eine Messung oder weist die Messung oder Eignung zur Messung auf, insbesondere gemäß einer Spezifikation. Bevorzugt umfasst die Feldgerätefunktion die Messung eines oder mehrerer dem Typ des jeweiligen Feldgeräts entsprechender Messergebnisse. Die Messergebnisse können hierzu mit dem Sensor des Feldgeräts gemessen werden. Die Messergebnisse können Parameter sein oder aufweisen. Die Messergebnisse repräsentieren insbesondere einen Durchfluss, einen Füllstand, eine Temperatur, einen Druck, ein Analyseergebnis oder dergleichen. Alternativ oder zusätzlich kann die Feldgerätefunktion auch ein Betrieb des Aktors sein oder aufweisen.

Die Feldgerätefunktion kann jedoch ergänzend zur Messung auch andere Funktionen aufweisen. Beispielsweise kann die Feldgerätefunktion eine Wandlung und/oder Ausgabe des durch die Messung ermittelten Messergebnisses aufweisen. Alternativ oder zusätzlich kann die Feldgerätefunktion eine Warnung, eine Ermittlung eines oder mehrerer ergänzender Messwerte und/oder eine Ermittlung von Angaben zum Betriebszustand des Feldgeräts oder der Anlage aufweisen.

Eine Verifikation im Sinne der vorliegenden Erfindung ist vorzugsweise die Überprüfung der Verifikationsinformation zur Bestätigung der Feldgerätefunktion oder Erkennung eines Defekts (mangelnde Feldgerätefunktion, insbesondere Fehlfunktion wie Messgenauigkeit oder Funktionslosigkeit) des Feldgeräts, und/oder der Erkennung eines Indikators für einen baldigen Defekt (Prognose eines Defekts) des Feldgeräts. Letztere ermöglicht es in vorteilhafter Weise, einen Austausch oder eine Instandsetzung des Feldgeräts während einer späteren, turnusmäßigen Wartung der das Feldgerät aufweisenden Anlage durchzuführen, sodass ungeplante Störungen ihres Betriebs wirksam vermieden werden können.

Zur oder bei der Verifikation kann ein Status eines Gerätes als Verifikationsinformation ausgelesen bzw. übermittelt werden. Dies kann z.B. basierend auf der NAMUR Empfehlung NE 107:2017-04-10 "Selbstüberwachung und Diagnose von Feldgeräten", Beuth-Verlag, 2017 oder anderen gängigen Industrienormen/Industrieempfehlungen erfolgen.

So kann die Verifikationsinformation die Ermittlung eines Ausfalls, eines Bedarfs an einer Funktionskontrolle, eines Betriebs außerhalb der Spezifikation, und/oder eines Wartungsbedarfs als Verifikationsergebnis ermöglichen. Die Ermittlung kann eine Interpretation der Verifikationsinformation unter weitergehender Analyse oder ohne weitergehende Analyse der Verifikationsinformation sein oder aufweisen.

Zur Bildung der Verifikationsinformation können Komponenten des Feldgeräts auf Funktionsfähigkeit überprüft werden, insbesondere eine Elektronik, ein Sensorelement, ein Aktorelement, ein oder mehrere mechanische Bauteile und/oder eine Einrichtung zur Energieversorgung des Feldgeräts, wobei die Verifikationsinformation dann das Ergebnis der Überprüfung aufweist oder hierdurch gebildet wird oder ist.

Es kann nach oder durch die Verifikation veranlasst eine Ausgabe des Verifikationsergebnisses erfolgen, wie automatische Benachrichtigungen und/oder Warnungen, z.B. in Form eines Warntons, einer entsprechenden Mitteilung oder einer ähnlichen, Aufmerksamkeit auf eine dem Status entsprechende Situation weckende Maßnahme.

Beispielsweise können Messabweichungen am Rande eines oder über einen vorgegebenen Toleranzbereich hinaus einen Indikator für einen baldigen Defekt bilden. Alternativ oder zusätzlich kann eine Prognose von Messabweichungen, beispielsweise über eine Zeitreihe, einen solchen Indikator für einen baldigen Defekt bilden. Es sind jedoch auch andere Indikatoren möglich, die unmittelbar oder mittelbar auf einen baldigen Defekt hindeuten.

Aufgrund der engmaschigeren Verifikation, die die vorliegende Erfindung ermöglicht, resultiert eine sicherere und/oder frühzeitigere Erkennung von Defekten oder potenzieller Defekte und ermöglicht damit die Vermeidung von Störungen und sich daraus ergebende Schäden.

Eine Verifikationsinformation im Sinne der vorliegenden Erfindung weist vorzugsweise Rohdaten auf, die einen Rückschluss auf die (ordnungsgemäße) Feldgerätefunktion ermöglichen. Mit der Verifikationsinformation und insbesondere den Rohdaten ist also die Feldgerätefunktion verifizierbar.

Bei der Verifikationsinformation bzw. den Rohdaten kann es sich um die Funktion des Feldgeräts betreffende Parameter handeln, um Ergebnisse eines Selbsttests, einer Selbstüberwachung und/oder einer Diagnose, um Ergebnisse einer Kalibriermessung, und/oder einen oder mehrere Status- und/oder Fehlerberichte. Die Verifikationsinformation weist insbesondere einen Gerätestatus und/oder (aktuelle) Messwerte des Feldgeräts auf. Die Verifikationsinformation kann jedoch alternativ oder zusätzlich auch andere Informationen enthalten. So kann die Verifikationsinformation neben den die Feldgerätefunktion charakterisierenden Rohdaten einen diesen zugeordneten Zeitstempel und/oder eine Feldgeräte-ID zur Identifikation des Feldgeräts aufweisen.

Mittels des Selbsttests bzw. der Selbstüberwachung und/oder Diagnose können Feldgeräte Informationen über ihren Zustand als Verifikationsinformation ermitteln und/oder bilden. Die Verifikationsinformation kann dazu geeignet sein, einen Messwert eines Sensors und/oder die Funktionsfähigkeit des Aktors des (jeweiligen) Feldgeräts zu plausibilisieren und dadurch die Funktion des (jeweiligen) Feldgeräts zu verifizieren. In vorteilhafter Weise können so negative Einflüsse auf eine Funktion der Anlage, die das oder die Feldgeräte aufweist, durch Ausfall von Feldinstrumentierung vermeiden werden.

Die Verifikationsinformation kann bei der Planung von Anlagenabstellungen und dergleichen verwendet werden. Hierdurch ermöglicht die vorliegende Erfindung bedarfsweise, geplante Instandhaltungsmaßnahmen zumindest teilweise entfallen zu lassen und stattdessen Instandhaltungsmaßnahmen zustandsorientiert durchzuführen, die entsprechend bedarfsgerechter sind bzw. eine Reduktion von Ausfallzeiten ermöglichen.

Bei dem mobilen Endgerät im Sinne der vorliegenden Erfindung handelt es sich besonders bevorzugt um ein Smartphone (Handy), Tablet-Computer, Wearables, insbesondere Smartwatches, oder um ein sonstiges tragbares Gerät. Das mobile Endgerät ist vorzugsweise für den netzunabhängigen Betrieb ausgerüstet, insbesondere also durch einen Energiespeicher wie eine Batterie oder einen Akku mit elektrischer Energie versorgt. Das mobile Endgerät ist bevorzugt tragbar.

Das mobile Endgerät ist vorzugsweise mit einem oder mehreren Feldgeräten koppelbar, wodurch eine drahtlose Verbindung zwischen dem (jeweiligen) Feldgerät und dem Endgerät aufgebaut wird. Das mobile Endgerät weist hierzu vorzugsweise einen Prozessor und/oder eine Applikation zur Durchführung des vorschlagsgemäßen Verfahrens und/oder einen Transceiver zur Kopplung und Herstellung der drahtlosen Datenverbindung auf. Es kann eine Benutzerschnittstelle aufweisen, wobei das vorschlagsgemäße Verfahren jedoch vorzugsweise keine Benutzereingaben erfordert.

Eine Kopplung in Sinne der vorliegenden Erfindung kann ein sogenanntes Pairing, also der Aufbau einer Datenverbindung und insbesondere Punkt-zu-Punkt-Datenverbindung, sein oder aufweisen. Die Kopplung kann mit einem Übertragungsstandard erfolgen, der insbesondere für Ad-hoc-Verbindungen geeignet und/oder üblich ist. Besonders bevorzugt handelt es sich um eine WLAN-, WPAN- und/oder NFC-Kopplung, beispielsweise per Bluetooth und bevorzugt nach dem Standard Bluetooth Low-Energy (BLE). Grundsätzlich kann die Kopplung bzw. drahtlose Datenverbindung jedoch auch mit anderen Verfahren bzw. Standards realisiert sein/werden.

Bevorzugt wird die Verifikationsinformation von dem Feldgerät über die Datenverbindung an das Endgerät übermittelt und entweder von dem Endgerät selbst oder einer externen Anwendung (Applikation) zur Bildung eines Verifikationsergebnisses verwendet.

Ein Verifikationsergebnis im Sinne der vorliegenden Erfindung kann ein Indikator für eine spezifikationsgemäße oder nicht spezifikationsgemäße Funktion (Defekt) des Feldgeräts sein oder bilden. Alternativ oder zusätzlich kann das Verifikationsergebnis Details zur Funktion wie eine Genauigkeitsinformation oder Toleranzinformation sein oder aufweisen. Ganz besonders bevorzugt weist das Verifikationsergebnis eine Prognose über die spezifikationsgemäße oder nicht spezifikationsgemäße Funktion des Feldgeräts und/oder eine Handlungsempfehlung betreffend das Feldgerät auf.

Vorzugsweise wird die Verifikationsinformation über das Endgerät oder auch über eine sonstige Datenverbindung direkt oder indirekt an die externe Anwendung übermittelt. Bei der externen Anwendung handelt es sich bevorzugt um einen auf einem Server bzw. in der (Internet-)Cloud ausgeführten oder ausführbaren Prozess. Die externe Anwendung ist vorzugsweise baulich/räumlich getrennt vom Endgerät realisiert. Die Funktion(en) der externen Anwendung können jedoch auch im Endgerät realisiert sein. Die externe Anwendung kann eine Datenplattform sein oder bilden.

Durch die externe Anwendung kann die Verifikationsinformation empfangen und ausgewertet werden, sodass die externe Anwendung das Verifikationsergebnis bildet. Alternativ oder zusätzlich kann die Anwendung das durch Auswertung der Verifikationsinformation gebildete Verifikationsergebnis empfangen, weiterverarbeiten, auswerten, speichern und/oder zu einer Zeitreihe aggregieren. Bedarfsweise kann dies durch das mobile Endgerät initiiert werden. Optional stellt die externe Anwendung Informationen zur Überprüfung eines Verifikationserfordernisses bereit, mit denen überprüft werden kann, ob eine Verifikation des jeweiligen Feldgeräts zum vorliegenden Zeitpunkt erfolgen soll. Die externe Anwendung kann optional mehrere Feldgeräte einer Anlage verwalten. Die Verwaltung kann jedoch auch anderweitig erfolgen und die Anwendung kann auch mehrere Module für unterschiedliche Funktionen aufweisen, die an unterschiedlichen Orten ausgeführt werden können. Die Anwendung kann ihre Funktionen für mehrere bzw. alle mobilen Endgeräte zentral zur Verfügung stellen.

Ein Empfangsbereich im Sinne der vorliegenden Erfindung ist vorzugsweise eine vom (jeweiligen) Feldgerät ausgehende Zone, die sich bis zu einem Abstand von dem (jeweiligen) Feldgerät erstreckt, bis zu dem die Kopplung beispielsweise mit dem Endgerät erfolgen bzw. die Datenverbindung aufgebaut werden kann. Der Empfangsbereich kann durch einen Transceiver bzw. eine Antenne des Feldgeräts gebildet bzw. beeinflusst sein.

In der vorliegenden Erfindung wird zugunsten der Klarheit und Knappheit vom Empfangsbereich des (jeweiligen) Feldgeräts gesprochen. Ungeachtet dessen kann der Empfangsbereich durch das Endgerät beeinflusst sein oder werden, insbesondere durch die Sende- bzw. Empfangseigenschaften des Endgeräts. So mag sich ein erweiterter oder verringerter Empfangsbereich einstellen, wenn die Sende- bzw. Empfangseigenschaften des Endgeräts besser bzw. schlechter sind. Somit kann unter dem Begriff "Empfangsbereich des Feldgeräts" also ein durch die Kombination des Feldgeräts mit dem Endgerät gemeinsam beeinflusster Bereich, in dem die Kopplung möglich ist, verstanden oder hierdurch ersetzt werden.

Weitere Vorteile, Eigenschaften und Aspekte der vorliegenden Erfindung ergeben sich aus den Ansprüchen und der nachfolgenden Beschreibung bevorzugter Ausführungsbeispiele anhand der Zeichnung. Es zeigen:
- Fig. 1: eine vereinfacht-schematische Ansicht eines vorschlagsgemäßen Systems; und
- Fig. 2: ein schematisches Ablaufdiagramm einer vorschlagsgemäßen Verifikation.

In den Figuren werden dieselben Bezugszeichen für identische oder ähnliche Teile verwendet, wobei entsprechende oder ähnliche Eigenschaften und Vorteile erreicht werden können, auch wenn von einer wiederholten Beschreibung abgesehen wird.

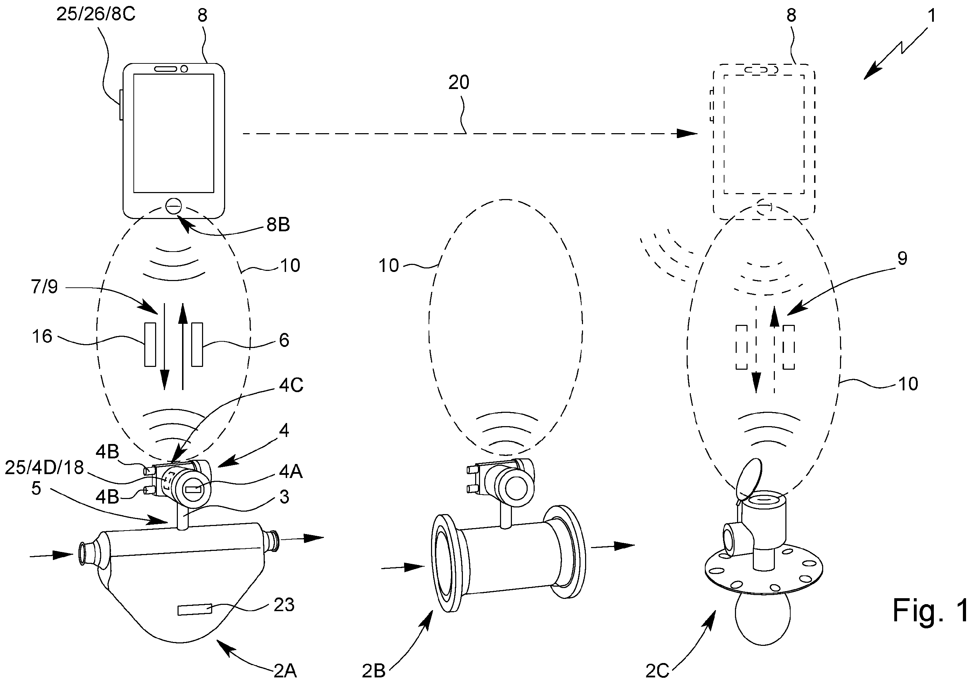

Fig. 1 zeigt ein vorschlagsgemäßes System 1 in einer vereinfacht-schematischen Ansicht. Das System 1 weist mindestens ein Feldgerät 2A, 2B, 2C auf.

Im Darstellungsbeispiel weist das System 1 drei Feldgeräte 2A, 2B, 2C auf. Es können jedoch auch mehr oder weniger oder andere Feldgeräte 2A, 2B, 2C vorgesehen sein. Die jeweiligen Feldgeräte 2A, 2B, 2C können dieselben oder unterschiedliche Feldgerätefunktionen aufweisen. Sie bilden vorzugsweise Teile einer gemeinsamen, bevorzugt prozesstechnischen Anlage.

Im Darstellungsbeispiel gemäß Fig. 1 handelt es sich beispielhaft um ein erstes, bevorzugt corioliseffektbasiertes Durchflussmessgerät 2A, ein zweites, bevorzugt ultraschallbasiertes Durchflussmessgerät 2B und ein drittes, bevorzugt radarbasiertes Füllstandsmessgerät 2C. Die vorliegende Erfindung ist jedoch auch mit anderen Feldgeräten vorteilhaft, sodass die angegebenen Feldgerätetypen lediglich Beispiele darstellen.

Die Feldgeräte 2A, 2B, 2C weisen vorzugsweise jeweils eine Verbindung 3 zwischen einem Messumformer 4 und einem Sensor 5 auf. Die jeweiligen Feldgeräte 2A, 2B, 2C können unterschiedliche Sensoren 5 aufweisen.

Der Sensor 5 ist vorzugsweise zur Messung einer oder mehrerer physikalischer und/oder chemischer Größen, bevorzugt Prozessgrößen, ausgebildet, insbesondere eines Durchflusses, eines Füllstands, eines Drucks, einer Temperatur und/oder einer oder mehrerer physikalischer und/oder chemischer Eigenschaften eines Mediums bzw. zur Flüssigkeitsanalyse.

Die Erfindung ist bei Anwendung in der Prozesstechnik besonders vorteilhaft, insbesondere bei dem Betrieb und der Überwachung weitläufiger prozesstechnischer Anlagen mit mehreren Feldgeräten 2A, 2B, 2C. Die vorliegende Erfindung ist hierauf jedoch vorzugsweise nicht beschränkt, sodass der Sensor 5 auch andere als die angegebenen Größen messen und die vorliegende Erfindung hier ebenfalls vorteilhaft sein kann.

Der Messeumformer 4 bildet vorzugsweise eine Schnittstelle zwischen dem Sensor 5 und der Peripherie wie einer Anlagensteuerung. Er kann insbesondere die mit dem Sensor 5 unmittelbar gemessene physikalische und/oder chemische Größen in Messdaten bzw. in Parameter als Messergebnisse umformen, die vorzugsweise den physikalischen und/oder chemischen Größen entsprechen oder hiervon abgeleitet sind.

Der Messumformer 4 kann eine Anzeigeeinrichtung 4A zur Anzeige der Messergebnisse oder eines Betriebszustands des Feldgeräts 2A, 2B, 2C aufweisen. Alternativ oder zusätzlich weist der Messumformer 4 eine bevorzugt drahtgebundene Schnittstelle 4B auf, die zur Ausgabe der mit dem Sensor 5 ermittelten Messergebnisse ausgebildet ist.

Der Messumformer 4 weist vorzugsweise eine Funkschnittstelle 4C auf, über die die Verifikation der Feldgerätefunktion, insbesondere der Messgenauigkeit oder die Defekterkennung, erfolgen kann. Bei dieser Funkschnittstelle 4C handelt es sich vorzugsweise um einen Transceiver, der mit einem Datenübertragungsprotokoll betrieben wird, beispielsweise Bluetooth, insbesondere Bluetooth LE (BLE), oder einem anderen, beispielsweise WPAN-, WLAN-, oder NFC-Protokoll.

Die Feldgeräte 2A, 2B, 2C bilden vorzugsweise selbsttätig oder auf entsprechenden Befehl hin die Verifikationsinformation 6 oder sind dazu ausgebildet.

Bevorzugt werden von unterschiedlichen Feldgeräten 2A, 2B, 2C gerätetypspezifische und ggf. zumindest teilweise unterschiedliche Verifikationsinformationen 6 gebildet und/oder bei bzw. zur Verifikation ausgewertet. Es werden also je nach Gerätetyp oder Sensor 5 des jeweiligen Feldgeräts 2A, 2B, 2C bei der Verifikation vorzugsweise unterschiedliche Erfordernisse anhand der jeweiligen Verifikationsinformation 6 überprüft.

Während die vorliegende Erfindung im Folgenden exemplarisch anhand eines der Feldgeräte 2A, 2B, 2C, nämlich zunächst vorrangig anhand des in Fig. 1 links dargestellten Feldgeräts 2A, näher erläutert wird, weisen die unterschiedlichen Feldgeräte 2A, 2B, 2C vorzugsweise jeweils die exemplarisch anhand des Feldgeräts 2A beschriebenen Eigenschaften ebenfalls auf, sofern nichts Gegenteiliges erläutert ist oder sich implizit ergibt. Die Primärfunktion bzw. der Sensor 5 des jeweiligen Feldgeräts 2A, 2B, 2C mag unterschiedlicher Natur sein, die grundsätzlichen Schritte, Eigenschaften und Vorteile der vorschlagsgemäßen Verifikation sind jedoch vorzugsweise für die Feldgeräte 2A, 2B, 2C gleich, sodass von einer wiederholten Beschreibung abgesehen wird.

Vorschlagsgemäß wird die Feldgerätefunktion des ersten Feldgeräts 2A verifiziert. Hierzu wird anhand der Verifikationsformation 6 die Feldgerätefunktionen überprüft. Die Verifikationsformation 6 kann hierzu ein oder mehrere, den Betrieb des Feldgeräts 2A betreffende Betriebsparameter des Feldgeräts 2A bzw. Sensors 5 und insbesondere Selbsttestergebnisse (Ergebnisse bevorzugt einer oder mehrerer geräteinterner Prüfmethoden) aufweisen, die überprüft werden. Zur Überprüfung kann die Verifikationsinformation 6, also können insbesondere die Betriebsparameter bzw. Selbsttestergebnisse, im Hinblick auf Erwartungswerte, Referenzwerte, Toleranzbereiche, Entwicklungstendenzen, eine Spezifikation und dergleichen analysiert werden.

Die Verifikation ist erfolgreich, wenn bei der Überprüfung keine Unregelmäßigkeiten identifiziert werden. Die Verifikation schlägt fehl, wenn bei der Überprüfung Unregelmäßigkeiten wie Abweichungen von einem Erwartungswert, Referenzwert, Toleranzwert, einer Spezifikation oder dergleichen identifiziert werden. Eine fehlgeschlagene Verifikation führt vorzugsweise zu einer Signalisierung wie einer Benachrichtigung oder Warnung, beispielsweise durch das Endgerät 8 oder andere Ausgabeeinrichtung.

Wie in Fig. 1 beispielhaft schematisch dargestellt, erfolgt eine Kopplung 7 zwischen einem mobilen Endgerät 8 und dem Feldgerät 2A, wodurch eine drahtlose Datenverbindung 9 zwischen dem Feldgerät 2A und dem Endgerät 8 aufgebaut wird.

Das mobile Endgerät 8 kann eine Anzeigeeinrichtung 8A wie ein Display, insbesondere Touchscreen, aufweisen. Alternativ oder zusätzlich weist das mobile Endgerät 8 eine Funkschnittstelle 8B auf, über die die Kopplung 7 erfolgen kann. Bei der Funkschnittstelle 8B handelt es sich vorzugsweise um einen Transceiver, der mit einem Datenübertragungsprotokoll betrieben wird, beispielsweise Bluetooth, insbesondere Bluetooth LE (BLE), oder einem anderen, beispielsweise WPAN-, WLAN-, oder NFC-Protokoll.

Die Funkschnittstelle 8B des mobilen Endgeräts 8 korrespondiert vorzugsweise zu der Funkschnittstelle 4C des Feldgeräts 2A bzw. Messumformers 4. Die Funkschnittstellen 4C, 8B sind dazu ausgebildet, die Kopplung 7 zu bewirken. Hierzu können verfügbare Kopplungspartner (kopplungsbereites Feldgerät 2A und kopplungsbereites mobiles Endgerät 8) im Empfangsbereich 10 identifiziert und ein Kopplungsprozess gestartet werden, um die drahtlose Datenverbindung 9 aufzubauen.

Bei der drahtlosen Datenverbindung 9 handelt es sich vorzugsweise um eine drahtlose Punkt-zu-Punkt-Verbindung. Durch die Kopplung 7 kann ein Ad-hoc-Netzwerk gebildet oder erweitert werden. Es sind jedoch auch andere Formen der Datenverbindung 9 möglich.

Vorschlagsgemäß erfolgt die Kopplung 7 vollautomatisch, wenn das Endgerät 8 in einen Empfangsbereich 10 des Feldgeräts 2A gelangt. Es kann also vorgesehen sein, dass sich das Endgerät 8 relativ zum Feldgerät 2A bewegt - wie in Fig. 1 durch den gestrichelten Pfeil angedeutet - und das Endgerät 8 im Zuge dieser Bewegung 20 in den Empfangsbereich 10 des Feldgeräts 2A gelangt.

Nach Aufbau der drahtlosen Datenverbindung 9 wird die Verifikationsinformation 6 über die drahtlose Datenverbindung 9 von dem Feldgerät 2A übertragen und die Feldgerätefunktion des Feldgeräts 2A mit der Verifikationsinformation 6 verifiziert.

Im Darstellungsbeispiel bildet das Feldgerät 2A die Verifikationsinformation 6, die über die drahtlose Datenverbindung 9 vollautomatisch von dem Feldgerät 2A bevorzugt an oder über das mobile Endgerät 8 übertragen wird.

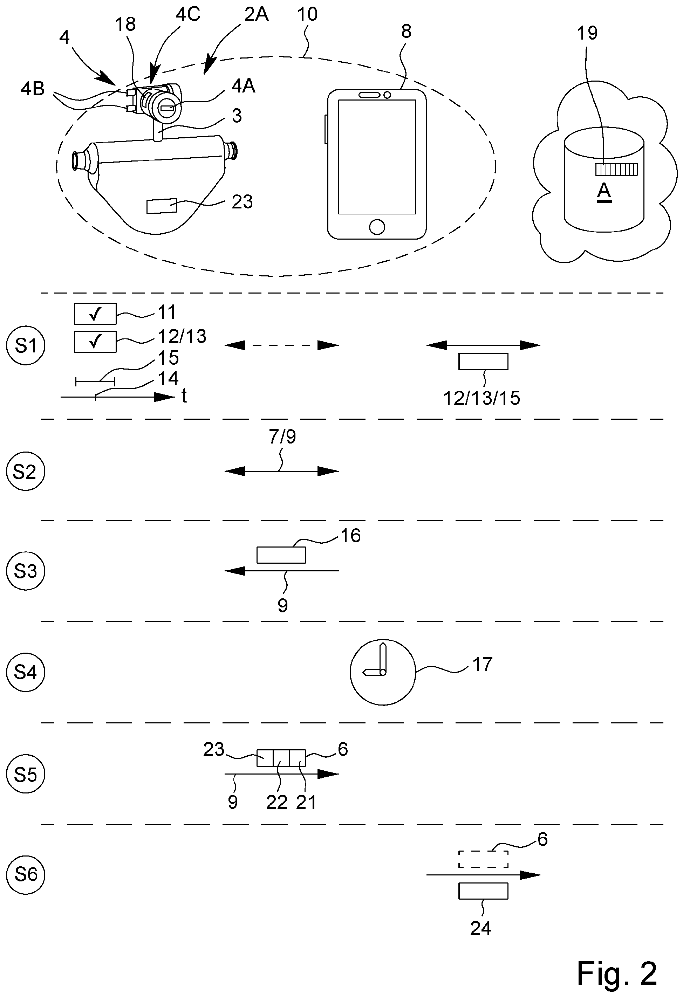

Fig. 2 zeigt ein schematisches Ablaufdiagramm einer vorschlagsgemäßen Verifikation anhand chronologisch aufeinander aufbauender Schritte S1 bis S6. Es versteht sich, dass es grundsätzlich möglich ist, einen oder mehrere der Schritte S1 bis S6 auszulassen, Schritte einzufügen und/oder nur eine Teilmenge der Schritte S1 bis S6, bevorzugt unter Beibehaltung der dargestellten Reihenfolge, durchzuführen.

In einem ersten Schritt S1 wird vorzugsweise zunächst sondiert, ob eine Kopplung 7 zwischen dem mobilen Endgerät 8 und dem Feldgerät 2A aufgebaut werden soll.

Im ersten Schritt S1 kann das Verfahren mit einer Erkennung eines koppelbaren Paares aus einem Feldgerät 2A und einem mobilen Endgerät 8 starten. Hierzu kann das mobile Endgerät 8 das koppelbare Feldgerät 2A identifizieren.

In Fig. 2 ist exemplarisch anhand einer Checkbox symbolisiert, dass die Kopplungsbereitschaft 11 des Feldgeräts 2A vorliegt. Insbesondere ist also die Funkschnittstelle 4C des Feldgeräts 2C bereit, mittels der Kopplung 7 die drahtlose Datenverbindung 9 zu dem mobilen Endgerät 8 bzw. dessen Funkschnittstelle 8B aufzubauen.

Das Endgerät 8 kann kontinuierlich nach Feldgeräten 2A, 2B, 2C mit einer Kopplungsbereitschaft 11 suchen und/oder das Feldgerät 2A, 2B, 2C kann kontinuierlich nach Endgeräten 8 mit einer Kopplungsbereitschaft suchen. Wenn ein koppelbares Feldgerät 2A und/oder Endgerät 8 gefunden wurde(n), wird die Kopplung 7 vollautomatisch durchgeführt. Die Kopplung 7 kann jedoch optional in Abhängigkeit von Bedingungen erfolgen bzw. nicht erfolgen oder abgebrochen werden, wie im Folgenden näher erläutert.

Erfindungsgemäß wird ein Verifikationserfordernis 12 überprüft. Das Verifikationserfordernis 12 gibt an, ob eine Verifikation des Feldgeräts 2A aktuell erfolgen soll.

Die Bildung der Verifikationsinformation 6, die Kopplung 7, die Übertragung der Verifikationsinformation 6 und/oder eine/die Auswertung der Verifikationsinformation 6 zwecks Verifikation erfolgen nur, wenn das Verifikationserfordernis 12 überprüft und erfüllt ist.

Das Verifikationserfordernis 12 ist vorzugweise dann erfüllt oder erfüllbar, wenn anhand einer Information zur Überprüfung das Verifikationserfordernis 12 vorliegt, insbesondere eine dem Feldgerät 2A zugeordnete Markierung 13 vorliegt und/oder der aktuelle Zeitpunkt 14 in ein dem Feldgerät 2A zugeordnetes Verifikationsintervall 15 fällt.

So kann überprüft werden, bevorzugt durch das mobile Endgerät 8, ob das Feldgerät 2A zum aktuellen Zeitpunkt 14 verifiziert werden soll. Hierzu kann eine Information hinterlegt sein, die besagt, dass das Feldgerät 2A verifiziert werden soll. Beispielsweise kann eine Markierung 13 vorliegen, in Fig. 2 durch eine Checkbox symbolisiert, wobei das Verifikationserfordernis 12 erfüllt oder erfüllbar ist, wenn die dem Feldgerät 2A zugeordnete Markierung 13 vorliegt.

Alternativ oder zusätzlich können ein oder mehrere Verifikationsintervalle 15 (Zeitintervalle) definiert sein oder werden. Hierbei ist das Verifikationserfordernis 12 erfüllt oder erfüllbar, wenn der aktuelle Zeitpunkt 14 in ein dem Feldgerät 2A zugeordnetes Verifikationsintervall 15 fällt. Dies ist ebenfalls im Schritt S1 in Fig. 2 angedeutet. Die Markierung 13 und/oder das Verifikationsintervall 15 sind dem Feldgerät 2A zugeordnet und daher in Fig. 2 im Bereich des Feldgeräts 2A dargestellt. Die Markierung 13 und/oder das Verifikationsintervall 15 kann/können im Feldgerät 2A hinterlegt sein. Alternativ oder zusätzlich ist es jedoch möglich und bevorzugt, dass die Markierung 13 und/oder das Verifikationsintervall 15 im mobilen Endgerät 8 vorliegen oder hierdurch ermittelt werden.

Es kann eine externe Anwendung A vorgesehen sein, die datentechnisch mit dem Endgerät 8 gekoppelt ist, beispielsweise über ein Mobilfunknetz und/oder das Internet. Die externe Anwendung A ist insbesondere eine Server- und/oder (Internet-) Cloudanwendung. Die Anwendung A kann eine Datenplattform sein oder aufweisen. Die externe Anwendung A ist vorzugsweise eine zentrale Einrichtung für alle Endgeräte 8, wenn mehrere Endgeräte 8 vorgesehen sind.

Die Anwendung A kann Verifikationsinformationen 6 empfangen, auswerten, und/oder archivieren. Sie kann insbesondere Verifikationsinformationen 6 konsolidieren und/oder von unterschiedlichen Zeitpunkten zusammenführen sowie auf dieser Basis Prognosen erzeugen. Alternativ oder zusätzlich steuert die Anwendung A den Verifikationsprozess, vorzugsweise über das Endgerät 8 bzw. die Endgeräte 8.

Mit der Anwendung A kann ermittelt werden, ob für das Feldgerät 2A das Verifikationserfordernis 12 erfüllt ist. Hierzu kann die Markierung 13 und/oder das Verifikationsintervall 15 in der Anwendung A hinterlegt sein. Feldgeräte 2A können also in der Anwendung A als "zu testen" markiert sein oder werden.

Dann kann das mobile Endgerät 8 das Verifikationserfordernis 12 mit der Anwendung A überprüfen. Beispielsweise ermittelt das Endgerät 8 eine Feldgeräte-ID 23 des Feldgeräts 2A, übermittelt diese an die Anwendung A und erhält von dieser die Information zurück, ob das Verifikationserfordernis 12 erfüllt ist.

Die Markierung 13 und/oder das Verifikationsintervall 15 kann/können pro Feldgerät 2A und/oder in der Anwendung A definiert sein oder werden, beispielsweise repetitiv wie "so oft wie möglich" oder einmal pro Stunde / Tag / ...)

Das Verifikationsintervall 15 kann nach einer Phase, in der eine Verifikation nicht möglich oder nötig und/oder das Verifikationserfordernis 12 nicht erfüllt ist, starten. Das Verifikationsintervall 15 kann sich aus beispielsweise aus rechtlichen oder betrieblichen Randbedingungen und/oder aus anlagen- oder feldgerätspezifischen Randbedingungen wie einer Verfügbarkeit der Verifikationsinformation 6 ergeben.

Das Verifikationsintervall 15 wird vorzugsweise bei Abschluss einer Verifikation zurückgesetzt. Insbesondere wird bei Abschluss einer Verifikation die Phase gestartet, in der eine Verifikation nicht möglich oder nötig und/oder das Verifikationserfordernis 12 nicht erfüllt ist, und bei Ablauf dieser Phase startet das nächste Verifikationsintervall 15.

Im Verifikationsintervall 15, während das Feldgerät 2A markiert ist und/oder bei der Kopplung 7 wird vorzugsweise ein Selbsttest des Feldgeräts 2A, insbesondere ein Level-1-Test (bei ununterbrochener Messung durch das Feldgerät 2A), gestartet. Der Selbsttest des Feldgeräts 2A kann bei oder nach der Kopplung 7 (automatisch) getriggert werden. Dies ermöglicht den automatisierten Test von Feldgeräten 2A, insbesondere von solchen, die in Batching-Anwendungen installiert sind.

Wenn das Feldgerät 2A einen Level-2-Test (bei unterbrochener Messung des Feldgeräts 2A) unterstützt, kann alternativ oder zusätzlich im Verifikationsintervall 15 und/oder während das Feldgerät 2A markiert ist, bei oder nach der Kopplung 7 auch ein Selbsttest des Feldgeräts 2A des Level 2 gestartet werden.

In einer besonders vorteilhaften Ausgestaltung der vorliegenden Erfindung ergibt sich das Verifikationserfordernis 12 unter Berücksichtigung einer Kopplungswahrscheinlichkeit, mit der eine weitere Kopplung 7 oder Koppelbarkeit des Feldgeräts 2A mit einem/dem in seinem Empfangsbereich 10 befindlichen Endgerät 8 später in dem Verifikationsintervall 15 zu erwarten ist.

Das Verifikationserfordernis 12 kann dann erfüllt oder erfüllbar sein, wenn eine Überprüfung einer Restdauer des Verifikationsintervalls 15 (zwischen dem aktuellen Zeitpunkt 14 und dem Ende des Verifikationsintervalls 15) ergibt, dass die Kopplungswahrscheinlichkeit zu klein ist bzw. unter einer gewissen Schwelle liegt.

Sofern die Kopplungswahrscheinlichkeit in der Restdauer des Verifikationsintervalls 15 ausreichend groß ist bzw. über der Schwelle liegt, kann von einer Verifikation (Kopplung 7 / Selbsttest des Feldgeräts 2A) zum jetzigen Zeitpunkt 14 abgesehen und die Verifikation entsprechend zu einem späteren Zeitpunkt des Verifikationsintervalls 15 vorgenommen werden.

Beispielsweise sendet das mobile Endgerät 8 nach Erkennung eines Feldgeräts 2A eine zum Feldgerät 2A korrespondierende Pairing-Benachrichtigung und/oder eine Anfrage nach dem Verifikationserfordernis 12 für das Feldgerät 2A an die Anwendung A. Anhand der Pairing-Benachrichtigung bzw. Anfrage prüft die Anwendung A, mit welcher Wahrscheinlichkeit eine weitere Kopplung 7 innerhalb des Verifikationsintervalls 15 auftreten wird und weist das mobile Endgerät 8 nur dann an, weitere Schritte zur Verifikation bzw. den Selbsttest des Feldgeräts 2A zu starten, wenn das Verifikationsintervall 15 voraussichtlich vor der nächsten Kopplung 7 verlassen wird.

Beispiel 1: Eine Verifikation ist alle 12 Stunden gewünscht, vor 8 Stunden hat die letzte Verifikation stattgefunden, ca. alle 30 Minuten wird ein mobiles Endgerät 8 am Feldgerät 2A vorbeibewegt **→** noch keine neue Verifikation starten

Beispiel 2: Eine Verifikation ist alle 12 Stunden gewünscht, vor 8 Stunden hat die letzte Verifikation stattgefunden, ca. alle 300 Minuten wird ein mobiles Endgerät 8 am Feldgerät 2A vorbeibewegt **→** neue Verifikation starten

Beispiel 3: Eine Verifikation ist alle 12 Stunden gewünscht, vor 8 Stunden hat die letzte Verifikation stattgefunden, ca. alle 30 Minuten wird ein mobiles Endgerät 8 am zu verifizierenden Feldgerät 2A vorbeibewegt, aber das Verifikationsintervall 15 endet vorzeitig, beispielsweise wenn es 17 Uhr ist, die Schicht endet und es keine Nachtschicht gibt **→** neue Verifikation starten

Die Kopplung 7 erfolgt bzw. die drahtlose Datenverbindung 9 wird im zweiten Schritt S2 aufgebaut, vorzugsweise wenn die Kopplungsbereitschaft 11 des Feldgeräts 2A vorliegt und das Verifikationserfordernis 12 überprüft wurde und erfüllt ist. Die Kopplung 7 kann jedoch auch zuerst erfolgen, bevor das Verifikationserfordernis 12 überprüft wird.

Die Bildung der Verifikationsinformation 6 oder von Teilen der Verifikationsinformation 6 kann kontinuierlich oder im laufenden Betrieb des Feldgeräts 2A erfolgen, über eine Zeitsteuerung zu einem oder mehreren vorgegebenen Zeitpunkten und/oder über eine Ereignissteuerung, beispielsweise abhängig von bestimmten Randbedingungen wie einem überwachten Messverhalten des Sensors 5.

Grundsätzlich kann es also vorgesehen sein, dass die Verifikationsinformationen 6 zum Zeitpunkt der Kopplung 7 bereits vorliegt. Dies kann der Fall sein, wenn die Verifikationsinformation 6 kontinuierlich bzw. laufend gebildet wird. Das Feldgerät 2A kann einen oder mehrere Selbsttests oder sonstige Teile der Verifikation einschließlich der Bildung der Verifikationsinformation 6 hierzu auch ohne Kopplung 7 selbständig (im Hintergrund) ausführen.

Die Verifikationsinformation 6 kann in einem Gerätespeicher 18 des Feldgeräts 2A abgelegt bzw. zwischengespeichert sein oder werden. Die im Gerätespeicher 18 vorgehaltene bzw. zwischengespeicherte Verifikationsinformation 6 kann bei oder nach der Kopplung 7 von dem Feldgerät 2A übermittelt, insbesondere von diesem gesendet oder von dem/durch das mobile Endgerät 8 abgerufen/ausgelesen werden. Hierbei wird die Verifikationsinformation 6 vorzugweise über die Datenverbindung 9 übertragen.

Im Darstellungsbeispiel gemäß Fig. 2 wird hingegen über die Datenverbindung 9 ein Selbsttest-Steuerbefehl 16 von dem Endgerät 8 an das Feldgerät 2A übermittelt. Dies ist in Fig. 2 in Schritt S3 dargestellt. Auf den Empfang des Selbsttest-Steuerbefehls 16 durch das Feldgerät 2A kann das Feldgerät 2A einen Selbsttest durchführen und hierdurch die Verifikationsinformation 6 bilden.

Der Übermittlung des Selbsttest-Steuerbefehls 16 über die Datenverbindung 9 kann wie in Fig. 2 in Schritt S4 mit einem Uhrensymbol angedeutet, eine Wartezeit 17 folgen, während die Verifikationsinformationen 6 erzeugt wird.

Im Darstellungsbeispiel gemäß Fig. 2 wird die Verifikationsinformation 6 über die bestehende Datenverbindung 9 von dem Feldgerät 2A an das mobile Endgerät 8 übermittelt. Alternativ oder zusätzlich ist es möglich, dass die Verifikationsinformation 6 über das mobile Endgerät 8 an die Anwendung A übermittelt wird. Diese Übermittlung kann grundsätzlich auch unabhängig vom mobilen Endgerät 8 erfolgen.

Das Endgerät 8 kann die Funktion einer Bridge, eines Gateway oder Routers zwischen dem Feldgerät 2A und anderen Komponenten wie der Anwendung A erfüllen. Das Endgerät 8 kann also die Verifikationsinformation 6 über die drahtlose Datenverbindung 9 empfangen und über ein anderes Medium oder Netz wie ein Mobilfunknetz und/oder Internet weiterleiten, bevorzugt an die Anwendung A.

Die Verifikationsinformation 6 kann, wie in Schritt S5 von Fig. 2 schematisch angedeutet, Rohdaten 21, einen Zeitstempel 22 und/oder eine Feldgeräte-ID 23 aufweisen. Die Rohdaten 21 wiederum enthalten Informationen, die die Verifikation der Feldgerätefunktion ermöglichen. Insbesondere handelt es sich um Parameter, die den Betrieb oder ein Selbsttest-Ergebnis des Feldgeräts 2A repräsentieren.

Die Verifikationsinformation 6 wird vorzugsweise ausgewertet. Dies kann im mobilen Endgerät 8 erfolgen. Alternativ oder zusätzlich kann die Verifikationsinformation 6 an die externe Anwendung A übermittelt werden, die wiederum die Auswertung der Verifikationsinformation 6 bewirkt.

Die Verifikationsinformation 6 wird vorzugsweise hinsichtlich des Zustands des Feldgeräts 2A, hinsichtlich eines mit dem Feldgerät 2A durchgeführten Prozesses, und/oder zur Prognose möglicher Ausfälle oder Ausfallswahrscheinlichkeiten des Feldgeräts 2A ausgewertet.

So kann/können aktuelle Rohdaten 21 oder hiervon abgeleitete, beispielsweise aggregierte, Daten mit entsprechenden historischen Daten 19, über Zeitreihen und/oder mit Referenz- und/oder Schwellwerten verglichen werden. Alternativ oder zusätzlich kann basierend auf den Rohdaten 21 bzw. den hiervon abgeleiteten Daten eine Bestimmung von Veränderungstrends erfolgen.

In einem Aspekt der vorliegenden Erfindung wird eine Prognose der Feldgerätefunktion erstellt. Anhand der Prognose kann bewertet werden, ob ein Defekt absehbar bzw. wahrscheinlich ist. Entsprechend kann vor Eintreten des Defekts eine Wartung, eine Reparatur oder ein Austausch erfolgen.

Die Prognose kann auf Basis der Rohdaten 21, den hiervon abgeleiteten Daten und/oder Veränderungstrends erzeugt werden. Grundsätzlich kann zur Prognose jedoch auch eine andere Form der Auswertung der Verifikationsinformation 6 erfolgen.

Insbesondere wird eine Prognose möglicher Ausfälle oder Ausfallswahrscheinlichkeiten des Feldgeräts 2A anhand von historischen Daten 19, insbesondere einer oder mehreren Zeitreihen, erstellt, wobei die historischen Daten 19, insbesondere die eine oder mehreren Zeitreihen, den Rohdaten 21, den hiervon abgeleiteten Daten und/oder Veränderungstrends zu einem oder mehreren früheren Zeitpunkten entsprechen oder hierzu korrespondieren.

In einem Aspekt der vorliegenden Erfindung werden Rohdaten 21 oder Teile hiervon zu mehreren, unterschiedlichen, aufeinanderfolgenden Zeitpunkten erzeugt und eine/die Zeitreihe direkt aus diesen oder aus hiervon abgeleiteten Daten gebildet. Der Zeitstempel 22 und/oder die Feldgeräte-ID 23 kann/können hierzu verwendet werden, was jedoch nicht zwingend ist.

Ein Verifikationsergebnis 24 kann repräsentieren, ob die Verifikation erfolgreich war, also ob die Auswertung der Verifikationsinformation 6 ergeben hat, dass die Feldgerätefunktion keine Unregelmäßigkeiten wie einen Hinweis auf einen bestehenden oder baldigen Defekt aufweist. Das Verifikationsergebnis kann Details zur Funktion des Feldgeräts 2A wie eine Genauigkeitsinformation oder Toleranzinformation, eine Prognose über die spezifikationsgemäße oder nicht spezifikationsgemäße Funktion des Feldgeräts und/oder eine Handlungsempfehlung betreffend das Feldgerät sein oder aufweisen.

Wie in Schritt S6 in Fig. 2 angedeutet, kann die Verifikationsinformation 6 oder das durch Auswertung dieser gebildete Verifikationsergebnis 24 an die (externe) Anwendung A gesendet werden. Besonders bevorzugt empfängt die Anwendung A die Verifikationsinformation 6 und analysiert diese zur Bildung des Verifikationsergebnisses 24.

Das mobile Endgerät 8 kann eine Verbindung zwischen dem Feldgerät 2A und dem Internet herstellen, über das eine Datenverbindung zur Anwendung A besteht. Es ist jedoch alternativ oder zusätzlich möglich, dass die Anwendung A auf dem mobilen Endgerät 8 ausgeführt wird.

Bei der Bildung der Verifikationsinformation 6, der Kopplung 7, der Übertragung der Verifikationsinformation 6 und/oder der Auswertung der Verifikationsinformation 6 zwecks Verifikation handelt es sich vorzugsweise um eine oder mehrere Hintergrundaktivitäten. Insbesondere handelt es sich um Prozesse, die auf dem mobilen Endgerät 8, dem Feldgerät 2A und/oder der Anwendung A ausgeführt werden, ohne dass dies einen Benutzereingriff erfordert.

Insofern ist bevorzugt, dass die Hintergrundaktivitäten auch und gerade bei einem Endgerät 8 das vorschlagsgemäße Verfahren vollautomatisch durchführen, während die Benutzerschnittstelle des mobilen Endgeräts 8, die durch die berührungsempfindliche Anzeigeeinrichtung 8A gebildet sein kann, gegen Registrierung bzw. Verarbeitung von Eingaben gesperrt ist.

Es ist also bevorzugt, dass das gesperrte mobile Endgerät 8 die für die Kopplung 7 notwendigen Schritte vollautomatisch ausführt, woraufhin die Verifikationsinformation 6 übermittelt wird - sei es unter Übermittlung des Selbsttest-Steuerbefehls 16 von dem mobilen Endgerät 8 zu dem Feldgerät 2A oder durch Abruf einer bereits im Feldgerät 2A hinterlegten Verifikationsinformation 6. Auch die Auswertung der Verifikationsinformation 6 und/oder die Bildung des Verifikationsergebnisses 24 und/oder die Bildung von Zeitreihen erfolgt/erfolgen vorzugsweise vollautomatisch und/oder als Hintergrundaktivitäten.

Die Datenverbindung 9 wird vorzugsweise automatisch getrennt, wenn die Verifikationsinformation 6 vollständig oder teilweise übertragen worden ist und/oder wenn das mobile Endgerät 8 den Empfangsbereich 10 verlässt. Ist die Übertragung der Verifikationsinformation 6 bis zur Trennung der Datenverbindung 9 noch nicht (vollständig) erfolgt, wird diese vorzugsweise bei einer nächsten Kopplung 7 des oder eines anderen mobilen Endgeräts 8 mit demselben Feldgerät 2A durchgeführt/vervollständigt.

An dieser Stelle sei nochmals betont, dass die beschriebenen Aspekte der vorliegenden Erfindung vorzugsweise entsprechend für andere der Feldgeräte 2A, 2B, 2C und/oder andere mobile Endgeräte 8 gelten. Insbesondere kann also bezüglich der beschriebenen Aspekte das Feldgerät 2A durch eines oder mehrere andere Feldgeräte 2B, 2C ergänzt oder ersetzt werden.

Wenn das mobile Endgerät 8 in einen (anderen/weiteren) Empfangsbereich 10 der unterschiedlichen Feldgeräte 2A, 2B, 2C gelangt, gelten vorzugsweise die in Zusammenhang mit dem Feldgerät 2A anhand von Fig. 2 beschriebenen Aspekte entsprechend auch für das andere der Feldgeräte 2A, 2B, 2C.

Wie in Fig. 1 durch den gestrichelten Pfeil angedeutet, wird das mobile Endgerät 8 vorzugsweise relativ zu dem/den Feldgerät(en) 2A, 2B, 2C bewegt. Während der Bewegung 20 erfolgt die Kopplung 7 dann automatisch und/oder während der Bewegung 20 wird die Verifikationsinformation 6 über die drahtlose Datenverbindung 9 automatisch von dem jeweiligen Feldgerät 2A, 2B, 2C übertragen.

Besonders bevorzugt gelangt das mobile Endgerät 8 durch die Bewegung 20 relativ zu den Feldgeräten 2A, 2B, 2C sukzessive in Empfangsbereiche 10 unterschiedlicher der Feldgeräte 2A, 2B, 2C, sodass die jeweilige Verifikationsinformation 6 des jeweiligen der unterschiedlichen Feldgeräte 2A, 2B, 2C übermittelt wird und auf dieser Basis die Verifikation des jeweiligen der unterschiedlichen Feldgerät 2A, 2B, 2C erfolgen kann.

In einem Beispiel wird das oder werden die mobilen Endgeräte 8 im Bereich einer Anlage bzw. eines Systems 1, die/das Feldgeräte 2A, 2B, 2C aufweist, bewegt. Währenddessen sucht das mobile Endgerät 8 im Hintergrund / ohne Benutzereingriff nach koppelbaren Feldgeräten 2A, 2B, 2C, beispielsweise mit BLE Konnektivität. Sobald ein solches Feldgerät 2A, 2B, 2C gefunden wurde, führt das mobile Endgerät 8 ein automatisiertes Pairing, also eine Kopplung 7 mit dem jeweiligen der Feldgeräte 2A, 2B, 2C durch. Hierbei werden vorzugsweise einer oder mehrere der folgenden Schritte durchgeführt:
- Das mobile Endgerät 8 sendet eine Pairing-Benachrichtigung an die Anwendung A, wobei die Pairing-Benachrichtigung die Feldgeräte-ID, und/oder den aktuellen Zeitpunkt aufweisen kann.
- Das mobile Endgerät 8 prüft den Gerätespeicher 18 des gekoppelten der Feldgeräte 2A, 2B, 2C auf vorhandene Verifikationsinformationen 6 und lädt diese vom Feldgerät 2A, 2B, 2C herunter, bevorzugt in die Anwendung A.
- Das mobile Endgerät 8 prüft mit Hilfe der Anwendung A die Notwendigkeit und Möglichkeit einer (erneuten) Verifikation.
- Das mobile Endgerät 8 sendet bedarfsweise und insbesondere zur Uhrensynchronisation einen Zeitstempel 22 an das Feldgerät 2A, 2B, 2C und/oder an die Anwendung A und startet die Verifikation für das Feldgerät 2A, 2B, 2C.
- Das mobile Endgerät 8 wird weiterbewegt, was zu einem Disconnect der Kopplung 7 führt, und/oder die Kopplung 7 wird automatisch getrennt.
- Die Anwendung A erzeugt optional ein Prüfzertifikat aus der Verifikationsinformation 6 oder dem Verifikationsergebnis 24 und leitet dieses bei Bedarf weiter oder gibt es aus.

Sofern Feldgeräte 2A, 2B, 2C nicht über eine Echtzeituhr verfügen, erhalten diese bedarfsweise den aktuellen Zeitpunkt 14 und/oder das Verifikationsintervall 15 über das mobile Endgerät 8 (Nachkonfiguration bei Kopplung 7).

Bei der Kopplung 7 werden vorzugsweise nur die jeweils aktuelle Verifikationsinformation 6 vom Feldgerät 2A, 2B, 2C heruntergeladen und bedarfsweise in die Anwendung A hochgeladen.

In einem weiteren Aspekt der vorliegenden Erfindung wird die Verifikationsinformation 6 verteilt über mehrere zeitlich aufeinander folgende Kopplungen 7 des Feldgeräts 2A, 2B, 2C mit demselben oder unterschiedlichen Endgeräten 8 übertragen.

Es kann also vorgesehen sein, dass der Zeitraum, in dem das mobile Endgerät 8 sich im Empfangsbereich 10 des jeweiligen Feldgeräts 2A, 2B, 2C befindet, nicht ausreicht, um die Verifikationsinformation 6 vollständig zu übermitteln. In diesen Fällen ist es bevorzugt, dass eine teilweise oder schrittweise Übermittlung der Verifikationsinformation 6 über mehrere Kopplungen 7 gegebenenfalls sogar mit unterschiedlichen mobilen Endgerät 8 erfolgt. Die vollständige Verifikationsinformation 6 kann dann zusammengesetzt werden, beispielsweise durch die Anwendung A.

Mit anderen Worten kann die Verifikationsinformation 6 fragmentiert und innerhalb mehrerer Kopplungen 7 zur Anwendung A übertragen werden, wenn während der Übertragung der Verifikationsinformation 6 und/oder des Selbsttests das Endgerät 8 den Empfangsbereich 10 (Empfangsradius) des Feldgeräts 2A, 2B, 2C zu schnell wieder verlässt.

Mit der vorliegenden Erfindung können zusammenfassend in vorteilhafter Weise Feldgerätefunktionen mehrerer unterschiedlicher Feldgeräte 2A, 2B, 2C ohne Benutzereingriff basierend auf dem vorschlagsgemäß als Hintergrundaktivität realisierten Verfahrens beiläufig verifiziert werden, wobei das mobile Endgerät 8 bewegt wird und hierbei (zufällig/beiläufig) in Empfangsbereiche 10 der unterschiedlichen Feldgeräte 2A, 2B, 2C gelangt, wobei vollautomatisch die Kopplung 7 des mobilen Endgeräts 8 mit dem jeweiligen der unterschiedlichen Feldgerät 2A, 2B, 2C erfolgt, woraufhin die Erzeugung und/oder der Abruf der Verifikationsinformation 6 des jeweiligen Feldgeräts 2A, 2B, 2C und die Auswertung der Verifikationsinformation 6 und mit der Verifikationsinformation 6 die Verifikation der Feldgerätefunktion des jeweiligen Feldgeräts 2A, 2B, 2C bewirkt wird, indem ein Verifikationsergebnis 24 für das jeweilige Feldgerät 2A, 2B, 2C aus der Verifikationsinformation 6 abgeleitet wird.

Das vorschlagsgemäße Verfahren wird vorzugsweise bei dem vorschlagsgemäßen System 1 mit mindestens einem Endgerät 8 und mehreren Feldgerät 2A, 2B, 2C angewandt, das zur Durchführung des vorschlagsgemäßen Verfahrens ausgebildet ist. Bei dem System 1 sind die Feldgeräte 2A, 2B, 2C und das/die mobilen Endgeräte 8 also vorzugsweise derart korrespondierend zueinander ausgebildet, dass die Verifikation mit dem Verfahren gemäß der vorliegenden Erfindung durchführbar ist. Besonders bevorzugt wird auf dem Prozessor 8C des mobilen Endgeräts 8 ein Hintergrundprozess ausgeführt, der dazu ausgebildet ist, ein Feldgerät 2A, 2B, 2C bei Erreichen seines Empfangsbereichs 10 zu erkennen und daraufhin die vorschlagsgemäße Kopplung 7 zu bewirken.

Weiter ist der Hintergrundprozess bevorzugt dazu ausgebildet, den Selbsttest-Steuerbefehl 16 an das gekoppelte Feldgerät 2A, 2B, 2C zu senden und als Antwort die Verifikationsinformation 6 zu empfangen, die dann ausgewertet werden kann, ebenfalls ohne Benutzereingabe. Hierzu kann das Endgerät 8 die Auswertung der Verifikationsinformationen 6 vornehmen und/oder Verifikationsinformationen 6 an die Anwendung A weiterleiten, die dann die Auswertung vornimmt.

Auf den Feldgeräten 2A, 2B, 2C ist die Übermittlung der Verifikationsinformation 6 zur Verifikation der Feldgerätefunktion des jeweiligen Feldgeräts 2A, 2B, 2C ermögliche

Sowohl auf dem (jeweiligen) Feldgerät 2A, 2B, 2C als auch auf dem/den mobilen Endgerät(en) 8 sind vorzugsweise Hintergrundprozesse vorgesehen, die die vorschlagsgemäße Kopplung 7 und/oder die Übermittlung der Verifikationsinformation 6 zur Verifikation der Feldgerätefunktion des jeweiligen Feldgeräts 2A, 2B, 2C ohne Benutzereingriff vollautomatisch ermöglichen.

Weiter ist vorzugsweise ein Computerprogrammprodukt 25 vorgesehen, das Programmcodemittel aufweist, die, wenn Sie auf Prozessoren 4D, 8C des Feldgeräts 2A, 2B, 2C und des Endgeräts 8 / der Endgeräte 8 des Systems 1 ausgeführt werden, die Ausführung der Schritte des vorschlagsgemäßen Verfahrens bewirken.

Die Programmcodemittel sind vorzugsweise auf dem Gerätespeicher 18 des (jeweiligen) Feldgeräts 2A, 2B, 2C und/oder einem Endgerätespeicher 26 des mobilen Endgeräts 8 - bevorzugt nicht-flüchtig - gespeichert. Die Programmcodemittel können zwecks Durchführung des vorschlagsgemäßen Verfahrens ausgelesen und auf dem Prozessor 8C des mobilen Endgeräts 8 und/oder dem Prozessor 4D des jeweiligen Feldgerät 2A, 2B, 2C ausgeführt werden.

Einzelne Aspekte der vorliegenden Erfindung können getrennt voneinander realisiert und/oder in unterschiedlicher Weise miteinander kombiniert werden und hierbei synergistisch wirken und/oder vorteilhaft sein, auch wenn dies nicht explizit erläutert ist.

### Bezugszeichenliste:

| | | | |
|---|---|---|---|
| 1 | System | 14 | Zeitpunkt |
| 2A | Feldgerät | 15 | Verifikationsintervall |
| 2B | Feldgerät | 16 | Selbsttest-Steuerbefehl |
| 2C | Feldgerät | 17 | Wartezeit |
| 3 | Verbindung | 18 | Gerätespeicher |
| 4 | Messumformer | 19 | Historische Daten |
| 4A | Anzeigeeinrichtung | 20 | Bewegung |
| 4B | Schnittstelle | 21 | Rohdaten |
| 4C | Funkschnittstelle | 22 | Zeitstempel |
| 4D | Prozessor | 23 | Feldgeräte-ID |
| 5 | Sensor | 24 | Verifikationsergebnis |
| 6 | Verifikationsinformation | 25 | Computerprogrammprodukt |
| 7 | Kopplung | 26 | Endgerätespeicher |
| 8 | Mobiles Endgerät | | |
| 8A | Anzeigeeinrichtung | A | Anwendung |
| 8B | Funkschnittstelle | t | Zeit |
| 8C | Prozessor | S1 | Erster Schritt |
| 9 | Drahtlose Datenverbindung | S2 | Zweiter Schritt |
| 10 | Empfangsbereich | S3 | Dritter Schritt |
| 11 | Kopplungsbereitschaft | S4 | Vierter Schritt |
| 12 | Verifikationserfordernis | S5 | Fünfter Schritt |
| 13 | Markierung | S6 | Sechster Schritt |

## Patentansprüche

1. Verfahren zur Verifikation einer Feldgerätefunktion eines Feldgeräts (2A, 2B, 2C), vorzugsweise während einer ununterbrochenen Verbindung eines Messumformers (4) mit einem Sensor (5) des Feldgeräts (2),
wobei das Feldgerät (2A, 2B, 2C) eine Verifikationsinformation (6) bildet, mit der die Feldgerätefunktion verifizierbar ist,
wobei eine Kopplung (7) zwischen einem mobilen Endgerät (8) und dem Feldgerät (2A, 2B, 2C) erfolgt, wodurch eine drahtlose Datenverbindung (9) zwischen dem Feldgerät (2A, 2B, 2C) und dem mobilen Endgerät (8) aufgebaut wird, und
wobei die Verifikationsinformation (6) über die drahtlose Datenverbindung (9) von dem Feldgerät (2A, 2B, 2C) übertragen wird,
wobei die Kopplung (7) vollautomatisch erfolgt, wenn das mobile Endgerät (8) in einen Empfangsbereich des Feldgeräts (2A, 2B, 2C) gelangt,
**dadurch gekennzeichnet,**
**dass** die Verifikationsinformation (6) über die drahtlose Datenverbindung (9) vollautomatisch von dem Feldgerät (2A, 2B, 2C) übertragen und die Feldgerätefunktion des Feldgeräts (2A, 2B, 2C) mit der Verifikationsinformation (6) verifiziert wird, und
**dass** die Bildung der Verifikationsinformation (6), die Kopplung (7), die Übertragung der Verifikationsinformation (6) und/oder eine/die Auswertung der Verifikationsinformation (6) zwecks Verifikation nur erfolgt, wenn ein Verifikationserfordernis (12) überprüft und erfüllt ist, das angibt, ob eine Verifikation des Feldgeräts (2A, 2B, 2C) aktuell erfolgen soll.

2. Verfahren nach Anspruch 1, **dadurch gekennzeichnet, dass** das mobile Endgerät (8) kontinuierlich nach Feldgeräten (2A, 2B, 2C) mit einer Kopplungsbereitschaft (11) oder das Feldgerät (2A, 2B, 2C) kontinuierlich nach mobilen Endgeräten (8) mit einer Kopplungsbereitschaft (11) sucht und, wenn ein solches Feldgerät (2A, 2B, 2C) und/oder mobiles Endgerät (8) gefunden wurde, die Kopplung (7) vollautomatisch durchgeführt wird.

3. Verfahren nach Anspruch 1 oder 2, **dadurch gekennzeichnet, dass** es sich bei der Bildung der Verifikationsinformation (6), der Kopplung (7), der Übertragung der Verifikationsinformation (6) und/oder einer Auswertung der Verifikationsinformation (6) zwecks Verifikation um eine oder mehrere Hintergrundaktivitäten handelt.

4. Verfahren nach einem der voranstehenden Ansprüche, **dadurch gekennzeichnet, dass** das Verifikationserfordernis (12) erfüllt oder erfüllbar ist, wenn eine dem Feldgerät (2A, 2B, 2C) zugeordnete Markierung (13) vorliegt und/oder der aktuelle Zeitpunkt (14) in ein dem Feldgerät (2A, 2B, 2C) zugeordnetes Verifikationsintervall (15) fällt.

5. Verfahren nach Anspruch 4, **dadurch gekennzeichnet, dass** das Verifikationserfordernis (12) eine Koppelbarkeitswahrscheinlichkeit, mit der eine weitere Koppelbarkeit des Feldgeräts (2A, 2B, 2C) mit einem/dem in seiner Reichweite befindlichen mobilen Endgerät (8) später in dem Verifikationsintervall (15) zu erwarten ist, berücksichtigt.

6. Verfahren nach einem der voranstehenden Ansprüche, **dadurch gekennzeichnet, dass** die Bildung der Verifikationsinformation (6) durch einen durch das Feldgerät (2A, 2B, 2C) durchgeführten Selbsttest erfolgt und/oder über eine Zeitsteuerung und/oder über eine Ereignissteuerung und/oder über die drahtlose Datenverbindung (9) initiiert wird.

7. Verfahren nach einem der voranstehenden Ansprüche, **dadurch gekennzeichnet, dass** die Verifikationsinformation (6) in einem Gerätespeicher (18) des Feldgeräts (2A, 2B, 2C) zwischengespeichert wird, wobei die im Gerätespeicher (18) zwischengespeicherte Verifikationsinformation (6) bei Kopplung (7) des Feldgeräts (2A, 2B, 2C) mit dem mobilen Endgerät (8) aus dem Gerätespeicher (18) ausgelesen und über die drahtlose Datenverbindung (9) übertragen wird.

8. Verfahren nach einem der voranstehenden Ansprüche, **dadurch gekennzeichnet, dass** die Verifikationsinformation (6) hinsichtlich des Zustands des Feldgeräts (2A, 2B, 2C), hinsichtlich eines mit dem Feldgerät (2A, 2B, 2C) durchgeführten Prozesses, und/oder zur Prognose möglicher Ausfälle oder Ausfallswahrscheinlichkeiten des Feldgeräts (2A, 2B, 2C) ausgewertet wird, vorzugsweise anhand von historischen Daten (19), insbesondere Zeitreihen.

9. Verfahren nach einem der voranstehenden Ansprüche, **dadurch gekennzeichnet, dass** das mobile Endgerät (8) relativ zum Feldgerät (2A, 2B, 2C) bewegt wird und während der Bewegung (20) die Kopplung (7) automatisch erfolgt und/oder während der Bewegung (20) die Verifikationsinformation (6) über die drahtlose Datenverbindung (9) automatisch von dem Feldgerät (2A, 2B, 2C) übertragen wird.

10. Verfahren nach einem der voranstehenden Ansprüche, **dadurch gekennzeichnet, dass** die Verifikationsinformation (6) verteilt über mehrere zeitlich aufeinander folgenden Kopplungen (7) des Feldgeräts (2A, 2B, 2C) mit demselben oder unterschiedlichen mobilen Endgeräten (8) übertragen wird.

11. Verfahren nach einem der voranstehenden Ansprüche, **dadurch gekennzeichnet, dass** die Verifikationsinformation (6) Rohdaten (21), einen zugeordneten Zeitstempel (22) und/oder eine Feldgeräte-ID (23) des Feldgeräts (2) aufweist, und/oder
dass ein Verifikationsergebnis (24) durch Auswertung der Verifikationsinformation (6) gebildet wird, vorzugsweise wobei die Verifikationsinformation (6) durch eine bevorzugt cloudbasierte Anwendung (A), insbesondere Datenplattform, empfangen und ausgewertet wird, und/oder
dass die drahtlose Datenverbindung (9) nach der vollständigen oder teilweisen Übertragung der Verifikationsinformation (6) automatisch getrennt wird.

12. Verfahren nach einem der voranstehenden Ansprüche, **dadurch gekennzeichnet, dass** die Feldgerätefunktion mehrerer Feldgeräte (2A, 2B, 2C) jeweils mit dem Verfahren nach einem der voranstehenden Ansprüche verifiziert wird.

13. System (1) aufweisend mindestens ein mobiles Endgerät (8) sowie mindestens ein Feldgerät (2A, 2B, 2C), wobei das System (1) zur Durchführung des Verfahrens gemäß einem der voranstehenden Ansprüche ausgebildet ist.

14. Computerprogrammprodukt (25) aufweisend Programmcodemittel, die, wenn Sie auf Prozessoren (4D, 8C) des Feldgeräts (2A, 2B, 2C) und des mobilen Endgeräts (8) des Systems (1) nach Anspruch 13 ausgeführt werden, die Durchführung des Verfahrens gemäß einem der Ansprüche 1 bis 12 bewirken.

## Claims

1. Method for verifying a field device function of a field device (2A, 2B, 2C), preferably during an uninterrupted connection of a measuring transducer (4) to a sensor (5) of the field device (2),
wherein the field device (2A, 2B, 2C) forms verification information (6) with which the field device function is verifiable,
wherein a coupling (7) takes place between a mobile terminal (8) and the field device (2A, 2B, 2C), as a result of which a wireless data connection (9) is set up between the field device (2A, 2B, 2C) and the mobile terminal (8), and
wherein the verification information (6) is transmitted by the field device (2A, 2B, 2C) via the wireless data connection (9),
wherein the coupling (7) takes place fully automatically when the mobile terminal (8) reaches a reception area of the field device (2A, 2B, 2C),
**characterized**
**in that** the verification information (6) is transmitted fully automatically by the field device (2A, 2B, 2C) via the wireless data connection (9) and the field device function of the field device (2A, 2B, 2C) is verified with the verification information (6), and
**in that** the formation of the verification information (6), the coupling (7), the transmission of the verification information (6) and/or an/the evaluation of the verification information (6) for the purpose of verification takes place only if a verification requirement (12) is checked and satisfied, which specifies whether a verification of the field device (2A, 2B, 2C) shall take place currently.

2. Method according to claim 1, **characterized in that** the mobile terminal (8) continuously searches for field devices (2A, 2B, 2C) with a coupling readiness (11) or the field device (2A, 2B, 2C) continuously searches for mobile terminals (8) with a coupling readiness (11) and, when such a field device (2A, 2B, 2C) and/or mobile terminal (8) has been found, the coupling (7) is carried out fully automatically.

3. Method according to claim 1 or 2, **characterized in that** the formation of the verification information (6), the coupling (7), the transmission of the verification information (6) and/or an evaluation of the verification information (6) for the purpose of verification is/are one or more background activities.

4. Method according to one of the preceding claims, **characterized in that** the verification requirement (12) is satisfied or satisfiable if a marking (13) assigned to the field device (2A, 2B, 2C) is present and/or the current point in time (14) falls within a verification interval (15) assigned to the field device (2A, 2B, 2C).

5. Method according to claim 4, **characterized in that** the verification requirement (12) takes into consideration a coupling capability probability with which a further coupling capability of the field device (2A, 2B, 2C) to a/the mobile terminal (8) located within its range is to be expected later in the verification interval (15).

6. Method according to one of the preceding claims, **characterized in that** the formation of the verification information (6) takes place via a self-test carried out by the field device (2A, 2B, 2C) and/or is initiated via a time controller and/or via an event controller and/or via the wireless data connection (9).

7. Method according to one of the preceding claims, **characterized in that** the verification information (6) is temporarily stored in a device memory (18) of the field device (2A, 2B, 2C), wherein the verification information (6) temporarily stored in the device memory (18) is read out from the device memory (18) during coupling (7) of the field device (2A, 2B, 2C) to the mobile terminal (8) and is transmitted via the wireless data connection (9).

8. Method according to one of the preceding claims, **characterized in that** the verification information (6) is evaluated with regard to the state of the field device (2A, 2B, 2C), with regard to a process carried out with the field device (2A, 2B, 2C), and/or for predicting possible failures or failure probabilities of the field device (2A, 2B, 2C), preferably on the basis of historical data (19), in particular time series.

9. Method according to one of the preceding claims, **characterized in that** the mobile terminal (8) is moved relative to the field device (2A, 2B, 2C) and the coupling (7) takes place automatically during the movement (20) and/or the verification information (6) is transmitted automatically by the field device (2A, 2B, 2C) via the wireless data connection (9) during the movement (20).

10. Method according to one of the preceding claims, **characterized in that** the verification information (6) is transmitted in a distributed manner via multiple chronologically successive couplings (7) of the field device (2A, 2B, 2C) to the same or different mobile terminals (8).

11. Method according to one of the preceding claims, **characterized in that** the verification information (6) comprises raw data (21), an assigned time stamp (22) and/or a field device ID (23) of the field device (2), and/or
**in that** a verification result (24) is formed by evaluating the verification information (6), preferably wherein the verification information (6) is received and evaluated by a preferably cloud-based application (A), in particular data platform, and/or
**in that** the wireless data connection (9) is automatically disconnected after the complete or partial transmission of the verification information (6).

12. Method according to one of the preceding claims, **characterized in that** the field device function of a plurality of field devices (2A, 2B, 2C) is respectively verified with the method according to one of the preceding claims.

13. System (1) comprising at least one mobile terminal (8) and at least one field device (2A, 2B, 2C), wherein the system (1) is designed to carry out the method according to one of the preceding claims.

14. Computer program product (25) comprising program code means which, when they are executed on processors (4D, 8C) of the field device (2A, 2B, 2C) and of the mobile terminal (8) of the system (1) according to Claim 13, cause the method according to one of Claims 1 to 12 to be carried out.

## Revendications

1. Procédé de vérification d'une fonction d'appareil de terrain d'un appareil de terrain (2A, 2B, 2C), de préférence pendant une liaison ininterrompue d'un transducteur de mesure (4) avec un capteur (5) de l'appareil de terrain (2),
l'appareil de terrain (2A, 2B, 2C) formant une information de vérification (6) avec laquelle la fonction de l'appareil de terrain peut être vérifiée,
un couplage (7) étant effectué entre un terminal mobile (8) et l'appareil de terrain (2A, 2B, 2C), ce qui permet d'établir une liaison de données sans fil (9) entre l'appareil de terrain (2A, 2B, 2C) et le terminal mobile (8), et
l'information de vérification (6) étant transmise par l'appareil de terrain (2A, 2B, 2C) par le biais de la liaison de données sans fil (9),
le couplage (7) étant effectué de manière entièrement automatique lorsque le terminal mobile (8) parvient dans une zone de réception de l'appareil de terrain (2A, 2B, 2C),
**caractérisé en ce que**
l'information de vérification (6) est transmise de manière entièrement automatique par l'appareil de terrain (2A, 2B, 2C) par le biais de la liaison de données sans fil (9) et la fonction de l'appareil de terrain d'appareil de terrain (2A, 2B, 2C) est vérifiée avec l'information de vérification (6), et
la formation de l'information de vérification (6), le couplage (7), la transmission de l'information de vérification (6) et/ou une/l'évaluation de l'information de vérification (6) à des fins de vérification n'a lieu que lorsqu'une exigence de vérification (12) est vérifiée et satisfaite, laquelle indique si une vérification de l'appareil de terrain (2A, 2B, 2C) doit actuellement avoir lieu.

2. Procédé selon la revendication 1, **caractérisé en ce que** le terminal mobile (8) recherche en continu des appareils de terrain (2A, 2B, 2C) avec une disponibilité de couplage (11) ou l'appareil de terrain (2A, 2B, 2C) recherche en continu des terminaux mobiles (8) avec une disponibilité de couplage (11) et, lorsqu'un tel appareil de terrain (2A, 2B, 2C) et/ou un tel terminal mobile (8) ont été trouvés, le couplage (7) est effectué de manière entièrement automatique.

3. Procédé selon la revendication 1 ou 2, **caractérisé en ce qu'**il s'agit, lors de la formation de l'information de vérification (6), du couplage (7), de la transmission de l'information de vérification (6) et/ou d'une évaluation de l'information de vérification (6) à des fins de vérification, d'une ou de plusieurs activités d'arrière-plan.

4. Procédé selon l'une quelconque des revendications précédentes, **caractérisé en ce que** l'exigence de vérification (12) est satisfaite ou peut être satisfaite lorsqu'un marquage (13) associé à l'appareil de terrain (2A, 2B, 2C) est présent et/ou l'instant actuel (14) tombe dans un intervalle de vérification (15) associé à l'appareil de terrain (2A, 2B, 2C).

5. Procédé selon la revendication 4, **caractérisé en ce que** l'exigence de vérification (12) tient compte d'une probabilité de couplabilité avec laquelle une couplabilité supplémentaire de l'appareil de terrain (2A, 2B, 2C) avec un/le terminal mobile (8) se trouvant à sa portée doit être attendue plus tard dans l'intervalle de vérification (15).

6. Procédé selon l'une quelconque des revendications précédentes, **caractérisé en ce que** la formation de l'information de vérification (6) a lieu par un autotest effectué par l'appareil de terrain (2A, 2B, 2C) et/ou est initiée par le biais d'une commande temporelle et/ou par le biais d'une commande d'événement et/ou par le biais de la liaison de données sans fil (9).

7. Procédé selon l'une quelconque des revendications précédentes, **caractérisé en ce que** l'information de vérification (6) est stockée temporairement dans une mémoire d'appareil (18) de l'appareil de terrain (2A, 2B, 2C), l'information de vérification (6) stockée temporairement dans la mémoire d'appareil (18) étant lue lors du couplage (7) de l'appareil de terrain (2A, 2B, 2C) avec le terminal mobile (8) à partir de la mémoire d'appareil (18) et étant transmise par le biais de la liaison de données sans fil (9).

8. Procédé selon l'une quelconque des revendications précédentes, **caractérisé en ce que** l'information de vérification (6) est évaluée en ce qui concerne l'état de l'appareil de terrain (2A, 2B, 2C), en ce qui concerne un processus effectué avec l'appareil de terrain (2A, 2B, 2C), et/ou pour pronostiquer d'éventuelles défaillances ou probabilités de défaillance de l'appareil de terrain (2A, 2B, 2C), de préférence à l'aide de données historiques (19), en particulier de séries temporelles.

9. Procédé selon l'une quelconque des revendications précédentes, **caractérisé en ce que** le terminal mobile (8) est déplacé par rapport à l'appareil de terrain (2A, 2B, 2C) et le couplage (7) a lieu automatiquement pendant le déplacement (20) et/ou l'information de vérification (6) est transmise automatiquement par l'appareil de terrain (2A, 2B, 2C) par le biais de la liaison de données sans fil (9) pendant le déplacement (20).

10. Procédé selon l'une quelconque des revendications précédentes, **caractérisé en ce que** l'information de vérification (6) est transmise de manière répartie par le biais de plusieurs couplages (7) se succédant dans le temps de l'appareil de terrain (2A, 2B, 2C) avec le même ou différents terminaux mobiles (8).

11. Procédé selon l'une quelconque des revendications précédentes, **caractérisé en ce que** l'information de vérification (6) présente des données brutes (21), un horodatage associé (22) et/ou un ID d'appareil de terrain (23) de l'appareil de terrain (2), et/ou
**en ce qu'**un résultat de vérification (24) est formé par évaluation de l'information de vérification (6), l'information de vérification (6) étant de préférence reçue et évaluée par une application (A) de préférence basée sur le nuage, en particulier une plateforme de données, et/ou
**en ce que** la liaison de données sans fil (9) est automatiquement déconnectée après la transmission complète ou partielle de l'information de vérification (6).

12. Procédé selon l'une quelconque des revendications précédentes, **caractérisé en ce que** la fonction d'appareil de terrain de plusieurs appareils de terrain (2A, 2B, 2C) est vérifiée à chaque fois avec le procédé selon l'une quelconque des revendications précédentes.

13. Système (1) présentant au moins un terminal mobile (8) ainsi qu'au moins un appareil de terrain (2A, 2B, 2C), le système (1) étant réalisé pour mettre en œuvre le procédé selon l'une quelconque des revendications précédentes.

14. Produit de programme informatique (25) présentant des moyens de code de programme qui, lorsqu'ils sont exécutés sur des processeurs (4D, 8C) de l'appareil de terrain (2A, 2B, 2C) et du terminal mobile (8) du système (1) selon la revendication 13, provoquent la mise en œuvre du procédé selon l'une quelconque des revendications 1 à 12.
